Europäisches Patentamt

European Patent Office

Office européen des brevets

(19)

(11) Veröffentlichungsnummer: **0 070 250**
**B1**

(12) ## EUROPÄISCHE PATENTSCHRIFT

(45) Veröffentlichungstag der Patentschrift:
**19.02.86**

(51) Int. Cl.⁴: **B 23 D 63/06**

(21) Anmeldenummer: **82810249.1**

(22) Anmeldetag: **11.06.82**

(54) Vorrichtung zum Stauchen und Egalieren der Zähne eines Sägeblattes.

(30) Priorität: **18.06.81 CH 4035/81**

(43) Veröffentlichungstag der Anmeldung:
**19.01.83 Patentblatt 83/3**

(45) Bekanntmachung des Hinweises auf die Patenterteilung:
**19.02.86 Patentblatt 86/8**

(84) Benannte Vertragsstaaten:
**AT DE FR GB IT SE**

(56) Entgegenhaltungen:
**DE - A - 1 953 416
DE - C - 457 929
FR - A - 550 237
FR - A - 911 057
GB - A - 121 873
GB - A - 735 607
US - A - 1 539 079
US - A - 1 680 256
US - A - 2 137 225
US - A - 2 190 920
US - A - 2 865 234
US - A - 3 416 394**

(73) Patentinhaber: **KNOEPFEL AG, Werkzeug- und Maschinenbau, CH-9428 Walzenhausen (CH)**

(72) Erfinder: **Knoepfel, Hugo, Schleisse 622, CH-9428 Walzenhausen (CH)**

(74) Vertreter: **Gachnang, Hans Rudolf, Algisserstrasse 33, CH-8500 Frauenfeld (CH)**

## Beschreibung

Die in den Sägereien verwendeten Sägeblätter unterliegen einer starken Abnutzung. Sie müssen daher regelmässig nachgeschliffen werden. Das Schleifen der Sägeblätter geschieht üblicherweise in der Sägerei selbst. Ist ein Sägeblatt drei- bis viermal nachgeschliffen worden, muss jeder Zahn neu gestaucht und egalisiert werden, d.h. der Zahn muss im Bereich der Schneide auf ein bestimmtes Mass verbreitert werden. Vor und nach diesem Stauch- und Egalisiervorgang müssen die Zähne des Sägeblatts in einer Schärfmaschine geschliffen werden.

Es ist bekannt, zu diesem Zweck Hand-Stauchapparate und Hand-Egalisierapparate zu benützen. Es handelt sich hier um kleine und leichte Apparate, wobei man mit dem Stauchapparat nur stauchen und mit dem Egalisierapparat nur egalisieren kann. Der Nachteil dieser Hand-Apparate liegt darin, dass sich mit ihnen nur langsam arbeiten lässt. Auch ist ein grosser Kraftaufwand notwendig.

Zur Erleichterung der Arbeit ist es bekanntgeworden, solche Hand-Stauchapparate und Hand-Egalisierapparate mit einem pneumatischen Antrieb zu versehen. Die Arbeit wird dadurch wohl erleichtert, aber nur unwesentlich verkürzt.

Aus der US-A-2 190 920 ist eine Vorrichtung für das Stauchen der Zähne eines Sägeblattes bekannt, welche von Hand auf das unabhängig von ihr gelagerte Sägeblatt aufgesetzt werden kann und welche aus einer druckmittelbetriebenen Stauchvorrichtung mit einem im Winkel zum Rücken eines Sägezahnes einstellbaren Amboss und einer Stauchwelle und einer Klemmvorrichtung besteht.

Bekannt ist weiterhin eine vollautomatische elektrisch-hydraulische Stauch- und Egalisiermaschine aus der US-Patentschrift 3 416 394. Die Stauch- und Egalisierwerkzeuge sind um eine gemeinsame Achse schwenkbar in einem eine automatische Halte- und Fördervorrichtung für das Sägeblatt aufnehmenden Gehäuse untergebracht. Durch Schwenken der Werkzeuge kommen abwechslungsweise das Stauch- und das Egalisierwerkzeug jeweils an ein- und demselben Zahn zum Einsatz. Dann erfolgt vollautomatisch der Vorschub des Sägeblattes um eine Zahnteilung. Nun wird der nächstfolgende Zahn gestaucht und egalisiert und so fort.

Eine solche Maschine arbeitet relativ schnell. Sie hat jedoch den grossen Nachteil, dass sie nur in grösseren Betrieben Verwendung finden kann. Die Anschaffungskosten, die Bedienung und Wartung sowie der Raumbedarf sind für kleine Betriebe untragbar.

Aus der DE-OS 19 53 416 ist eine weitere vollautomatische Stauch- und Egalisiervorrichtung bekannt. Bei dieser sind die Stauch- und Egalisierwerkzeuge hintereinandergestellt, so dass pro Arbeitstakt jeweils an einem Zahn gestaucht und an einem andern Zahn egalisiert wird. Der zu stauchende Zahn wird zudem noch während des Stauchens elektrisch erhitzt, um eine bessere Materialverformung zu erhalten. Nach jedem Arbeitstakt wird durch eine Fördervorrichtung das Sägeblatt um eine Zahnteilung innerhalb der Maschine weitergeschoben und fixiert.

Aus den französischen Patentschriften Nr. 550 237 und 911 057 sind weitere vollautomatische Stauch- und Egalisiermaschinen für Sägeblätter bekanntgeworden. In beiden Maschinen erfolgt jeweils pro Arbeitstakt an einem ersten Zahn der Stauchvorgang und an einem anderen Zahn der Egalisiervorgang. Anschliessend wird das Sägeblatt von der Fördereinrichtung der Maschine um eine Teilung weitergeschoben und fixiert.

Ähnlich aufgebaute vollautomatische Stauch- und Egalisiermaschinen sind auch aus den US-Patenten Nr. 1 539 079 und 2 865 234 sowie aus der deutschen Patentschrift Nr. 457 929 bekannt.

Allen diesen vollautomatisch arbeitenden Maschinen ist gemeinsam, dass sie ein Maschinengehäuse aufweisen, welches die Stauch- und die Egalisiervorrichtung einerseits, die Klemm- und die Sägeblattfördervorrichtung andererseits, aufnimmt. Des weitern ist allen Maschinen gemeinsam, dass das Sägeblatt durch die Maschine hindurchgeführt wird, wobei der Transport durch einstellbare Vorschubfinger erfolgt, welche wie die übrigen Funktionen über Kurvenscheiben angetrieben werden. Diese vollautomatischen Stauch- und Egalisiermaschinen eignen sich vorzüglich in Grossbetrieben, welche über das entsprechende Fachpersonal und die entsprechenden Räumlichkeiten für die Aufstellung und den Betrieb dieser Maschinen verfügen.

Klein- und Mittelbetriebe haben einerseits nicht genügend Anfall an Sägeblättern zur wirtschaftlichen Ausnutzung der Maschine und andererseits nicht entsprechendes Personal und Räumlichkeiten zum Betrieb derselben.

Ein Nachteil dieser vollautomatischen Maschinen besteht auch darin, dass die endlosen Sägeblätter, die ausgelegt immerhin einen Durchmesser von 2 bis 6 Meter, eine Höhe bis 0,3 Meter und ein Gewicht von über 50 Kilogramm haben können, jeweils von der Schärfmaschine zur Stauch- und Egalisiermaschine und wieder zurück zur Schärfmaschine getragen werden müssen. Wenn man bedenkt, dass die Sägeblätter auch beidseitig Zähne aufweisen können, ist es unschwer zu verstehen, dass für den Transport der Sägeblätter von einer Maschine zur andern und wieder zurück mehrere Leute notwendig sind. Der Transport der Blätter ist zudem gefährlich, weil die Zähne auch ungeschliffen schwere Verletzungen verursachen können.

Des weiteren ist zu bedenken, dass für die vollautomatischen Stauch- und Egalisiervorrichtungen ein Raum von bis zu ca. 6 × 3 Meter für die Führung der Sägeblätter vorhanden sein muss, nochmals gleichviel wie für die Schärfmaschine. Die vorliegende Erfindung geht aus vom Stand der Technik nach US-A-2 190 920 und betrifft eine Vorrichtung nach dem Gattungsbegriff des Patentanspruch 1. Die vorliegende Erfindung bezweckt eine verhältnismässig preisgünstige Vorrichtung zu schaffen, mittels welcher man sowohl stauchen als auch egalisieren kann.

Eine weitere Aufgabe der Erfindung besteht darin, die Vorrichtung derart auszubilden, dass an beliebigem Ort innerhalb des Betriebes damit gearbeitet werden kann.

Insbesondere ist es eine Aufgabe der Erfindung, den Stauch- und Egalisiervorgang direkt an oder auf die Schärfmaschine zu legen.

Eine weitere Aufgabe der Erfindung besteht auch darin, dass die Vorrichtung in einfacher Weise auf die jeweils vorliegende Zahnteilung und Zahnform einstellbar ist.

Erfindungsgemäss werden diese Aufgaben bei einer Vorrichtung nach dem Gattungsbegriff des Anspruch 1 durch die im kennzeichnenden Teil des Patentanspruch 1 genannten Merkmale gelöst.

Weitere vorteilhafte Ausführungsformen sind den Unteransprüchen zu entnehmen.

Die erfindungsgemässe Vorrichtung hat den Vorteil, dass sie mehr leistet als die bekannten pneumatisch angetriebenen Hand-Stauchapparate und die gleichfalls pneumatisch angetriebenen Hand-Egalisierapparate zusammen, ohne dass dabei die Handhabung schwieriger wird.

Ein weiterer Vorteil der Erfindung besteht darin, dass die Vorrichtung im Gegensatz zu den bekannten vollautomatischen Maschinen wie auch gewisser halbautomatischer Maschinen keiner festen Installation bedarf. Die Vorrichtung wird vorteilhafterweise neben oder über der ohnehin vorhandenen Schleif- oder Schärfmaschine angeordnet oder aufgehängt.

Ein weiterer Vorteil von besonderer Art besteht darin, dass das Sägeblatt, welches vor und nach dem Stauch- und Egalisiervorgang die Schärfmaschine durchlaufen muss, für den Stauch- und Egalisiervorgang nicht aus dieser entfernt und nachträglich dieser wieder zugeführt werden muss.

Ein weiterer Vorteil der Erfindung besteht darin, dass während des Stauch- und Egalisiervorganges ein Zahn geschärft werden kann.

Ein weiterer Vorteil der Erfindung besteht darin, dass durch den Vorschub des Sägeblattes in der Schärfmaschine der Stauch- und Egalisiervorgang ungestört weitergehen kann, da die Vorrichtung mit dem Sägeblatt bewegt werden kann.

Ein weiterer Vorteil der Erfindung besteht darin, dass die Vorrichtung an beliebiger Stelle auf das Sägeblatt aufgesetzt und leicht auf diesem verschoben werden kann.

Nachfolgend wird anhand der Zeichnungen ein Ausführungsbeispiel der Erfindung näher beschrieben. Es zeigen:

Fig. 1 eine Gesamtansicht der Vorrichtung,
Fig. 2 eine Darstellung der Stauchvorrichtung, teilweise im Schnitt,
Fig. 3 eine Darstellung der Egalisiervorrichtung nach Pfeil A in Fig. 1, teilweise im Schnitt,
Fig. 4 eine schematische Anordnung der Stauch- und Egalisiervorrichtung und der Schärfmaschine sowie einem endlosen Sägeblatt,
Fig. 5 eine Anordnung gemäss Fig. 4 als Ansicht.

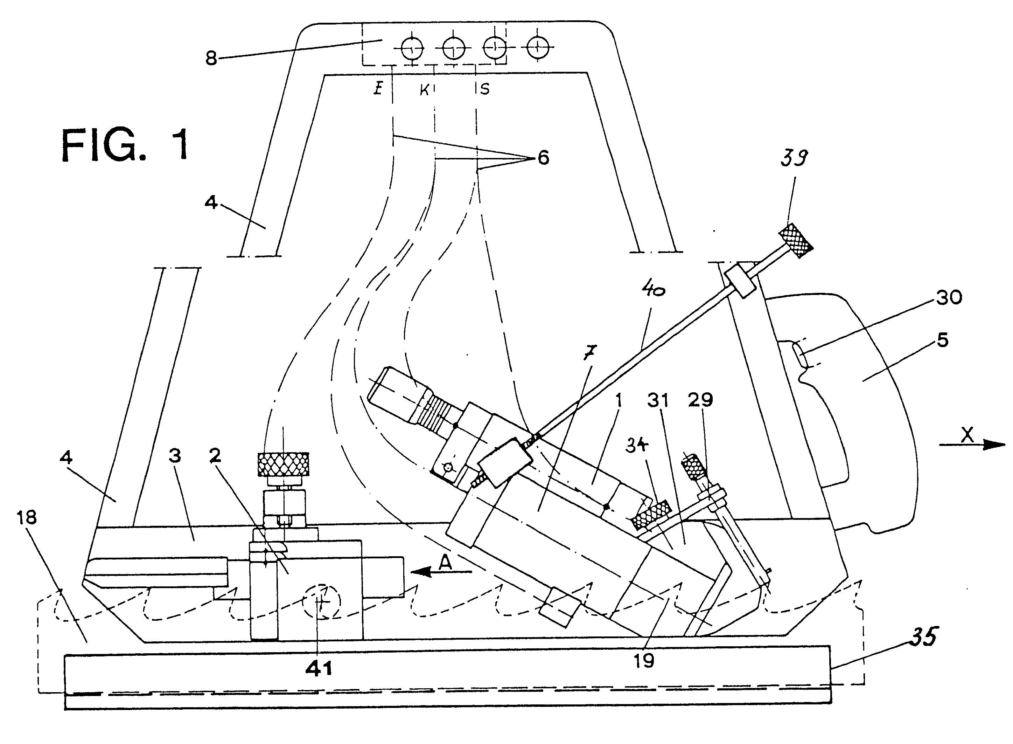

Wie aus Fig. 1 ersichtlich, besteht die Vorrichtung im wesentlichen aus einer Staucheinrichtung 1 und einer Egalisiereinrichtung 2. Die Staucheinrichtung 1 und die Egalisiereinrichtung 2 sind an einer Grundplatte 3 befestigt, welche ihrerseits mit den beiden Enden an einem Haltebügel 4 angeordnet ist. Am Haltebügel 4 befindet sich ein Haltegriff 5. Hydraulische Leistungen 6, hier nur schematisch angedeutet, führen zur Staucheinrichtung 1, zur Egalisiereinrichtung 2 sowie zu einem an der Staucheinrichtung 1 befindlichen Klemmzylinder 7. Der hydraulische Klemmzylinder 7 wirkt auf eine hier nicht näher dargestellte Klemmbacke, welche die Vorrichtung während des Stauch- und Egalisiervorganges auf dem Sägeblatt 18 festhält. Mittels einem nicht dargestellten Abstellhahn am Kopf 8 des Haltebügels 4 können die hydraulischen Leitungen 6 für die Staucheinrichtung 1 unterbrochen werden.

In einer Aufnahmevorrichtung 35 ist das Sägeblatt 18 geführt. Die Vorrichtung 35 kann auch Teil einer Schärfmaschine sein, welcher das Sägeblatt 18 vor und nach dem Stauch- und Egalisiervorgang zugeführt werden muss.

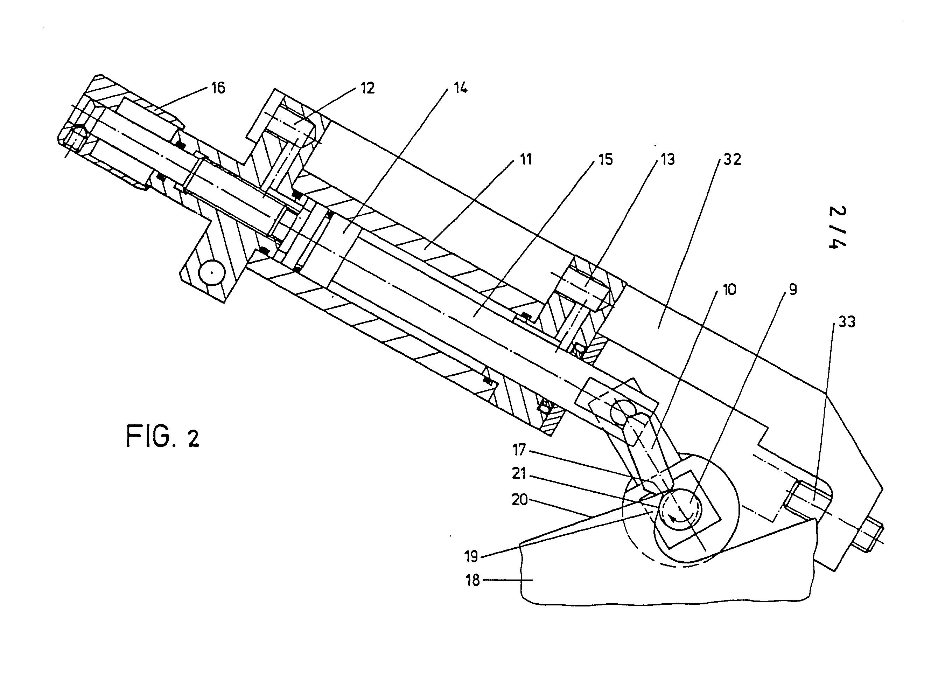

Die Staucheinrichtung 1 weist gemäss Fig. 2 einen Ambos 10 und eine Stauchwelle 9 auf. Mittels eines hydraulischen Zylinders 11 mit den Anschlüssen 12 und 13 für die hydraulischen Leitungen 6 kann die Stauchwelle 9 über den Kolben 14 und die Kolbenstange 15 in eine nach oben begrenzte Drehbewegung versetzt werden. Die Stauchwelle 9 hat in ihrem wirksamen Bereich einen abgeflachten Querschnitt. Eine Verstellschraube 16 dient zur Einstellung der Hubbewegung des hydraulischen Zylinders 11 und damit zur Einstellung der Grösse der Stauchwellenumdrehung in positiver Drehrichtung (Gegenuhrzeigersinn). Der Ambos 10 ist unabhängig vom hydraulischen Zylinder 11 in einem hier nur auf Fig. 1 gezeichneten Apparatekörper 31 gelagert. Allerdings ist dort auch nur die Stellschraube 34 sichtbar, mit welcher der Ambos 10 in der Höhe, d.h. im Abstand zur Stauchwelle 9, verstellt werden kann.

Der Apparatekörper 31 ist auf der Grundplatte 3 schwenkbar, damit der Winkel des Ambosses 10 zum Zahnrücken 20 eines Zahnes 19 des Sägeblattes 18 eingestellt werden kann. Folglich kann mit Hilfe einer auf den Apparatekörper 31 aufsteckbaren Einstellehre 29 sichergestellt werden, dass die Ambosfläche stets flach auf dem Zahnrücken 20 aufliegt. Zur Erleichterung kann an der Vorrichtung eine Einstellspindel 40 vorgesehen sein, mit der die Staucheinrichtung 1 mit einer Stellschraube 39 um die Achse der Stauchwelle 9 schwenkbar ist. Da der Ambos 10 ein Verschleissteil darstellt, ist er auswechselbar. Das gleiche gilt auch für die Stauchwelle 9.

Die in Fig. 2 gezeigte Ausführungsform der Staucheinrichtung 1 weist zudem ein Joch 32 auf, an dessen unteren Ende eine Stellschraube 33 vorgesehen ist. Die Schraube 33 liegt koaxial zur Kolbenstange 15 und begrenzt deren Hub, bzw. den Drehwinkel der Stauchwelle 9 in negativer Drehrichtung. Dadurch wird verhindert, dass das gestauchte, zur Zahnspitze getriebene Material (die Stauchbraue) zwischen dem Ambos 10 und der Stauchwelle 9 soweit gequetscht wird, dass Teile davon während des folgnden Egalisiervorganges abfallen und Störungen verursachen können.

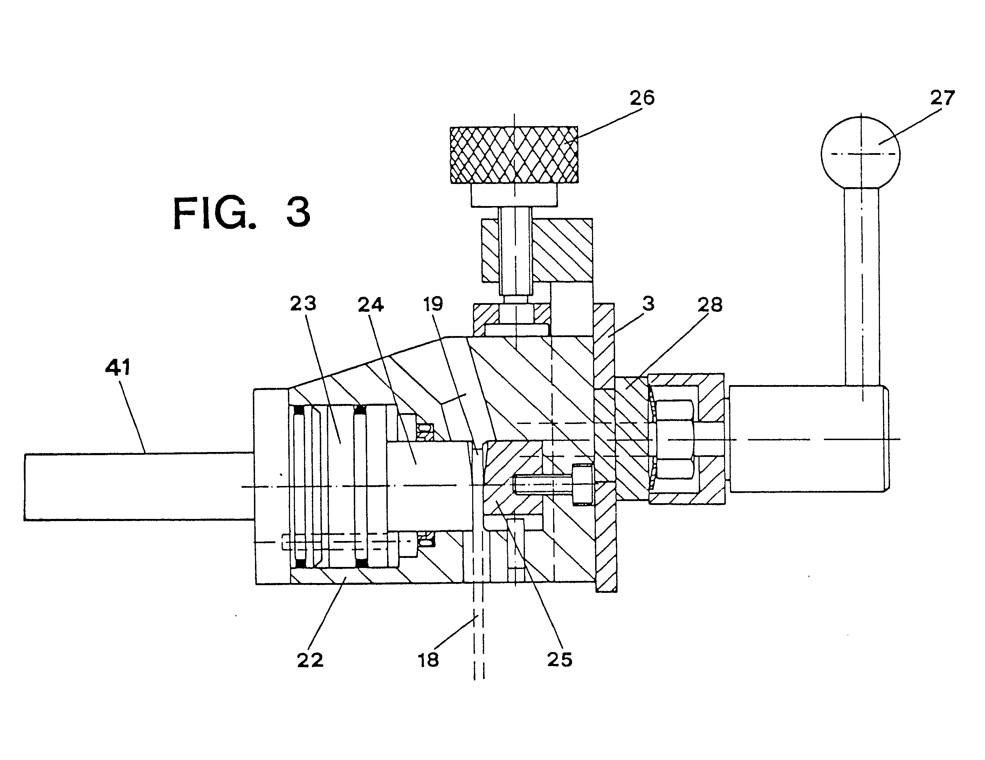

Die in Fig. 3 dargestellte Egalisiereinrichtung 2 weist, ähnlich wie die Staucheinrichtung 1, einen hydraulischen Zylinder 22 auf. Der Egalisierkolben 23 drückt den beweglichen Egalisierzylinder 24 in Richtung des ortsfest gelagerten Egalisierzylinders 25, so dass der dazwischenliegende Zahn 19 des Sägeblattes 18 egalisiert wird. Ein Verstellrad 26 dient zur Höhenverstellung der Egalisiereinrichtung 2 gegenüber dem Sägeblatt 18, wodurch die Zahndicke an der Schneide einstellbar ist.

Mit dem Handgriff 27 kann das Klemmstück 28 von der Grundplatte 3 gelöst werden, damit die Egalisiereinrichtung 2 entlang der Grundplatte 3 verschoben werden kann.

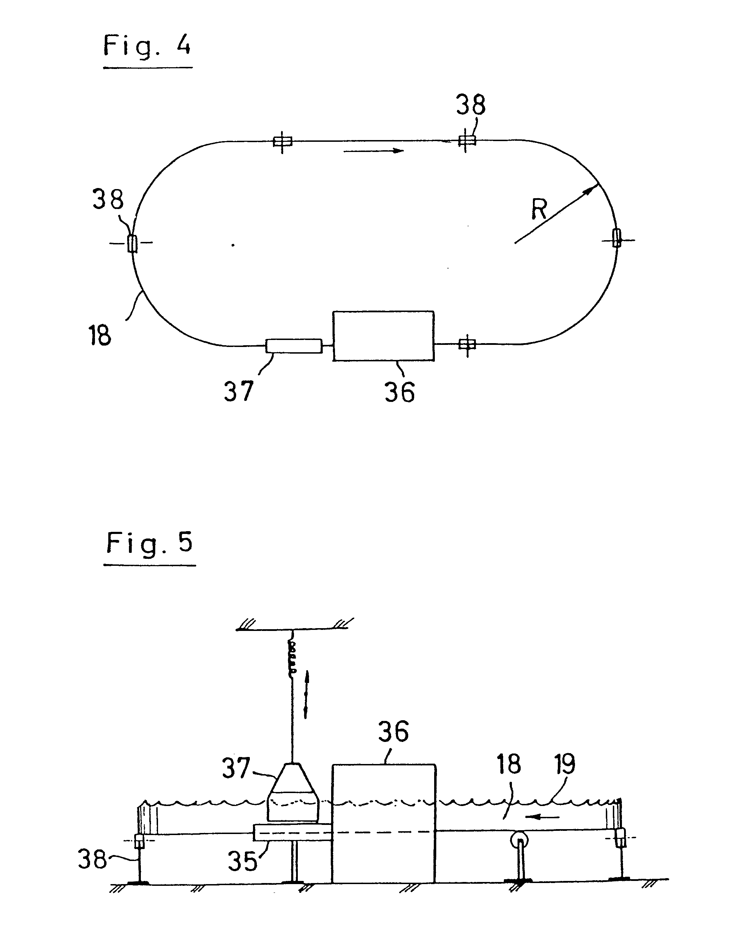

Fig. 4 zeigt eine Stauch- und Egalisiervorrichtung 37 neben einer Schärfmaschine 36. Das Sägeblatt 18 liegt in einer horizontalen Schlaufe und ist auf Führungsrollen 38 abgestützt. Der Radius R des Sägeblattes kann ohne weiteres 1 Meter oder mehr betragen.

In der Ansicht in Fig. 5 ist die Vorrichtung 37 gewichtsausgleichend aufgehängt und kommt über der Aufnahmevorrichtung 35 zu liegen, welche Teil der Schärfmaschine 36 oder aber ein unabhängiges Element sein kann.

Um die Zähne 19 eines Sägeblattes 18 zu stauchen und zu egalisieren, wird die Vorrichtung, wie in Fig. 1 gezeigt, derart auf das mit den Zähnen 19 nach oben zeigende, in der Aufnahmevorrichtung 35 festgehaltene Sägeblatt 18 gesetzt, dass ein Sägezahn 19 zwischen Stauchwelle 9 und Ambos 10 der Staucheinrichtung zu liegen kommt. Durch Betätigung des Handgriffes 27 an der Egalisiereinrichtung 2 wird diese von der Grundplatte 3 gelöst und kann entlang der Grundplatte 3 verschoben werden, bis ein Sägezahn 19 zwischen den Egalisierzylinder 24 und 25 zu liegen kommt. Danach wird die Egalisiereinrichtung wieder an der Grundplatte 3 fixiert. Auf diese Weise lässt sich die Vorrichtung entsprechend der Zahnteilung des zu bearbeitenden Sägeblattes 18 einstellen.

Vor Beginn der Bearbeitung wird mit Hilfe einer Einstellehre 29 der Ambos 10, entsprechend dem Freiwinkel der Sägezähne 19 eingestellt, so dass seine Fläche 17 flach auf dem Zahnrücken 20 aufliegt (Fig. 2). Mit der Stellschraube 33 wird anschliessend der Betrag der Stauchung des Zahnes festgelegt.

Über einen elektrischen Schalter 30 am Handgriff 5 wird eine mit einer elektrischen Steuerung versehene Pumpe zur Durchführung des hydraulischen Arbeitsprozesses eingeschaltet. Der Ablauf des Arbeitsprozesses erfolgt dann automatisch:

Als erstes wird der Klemmzylinder 7 mit Druck beaufschlagt und somit die frei über dem Sägeblatt 18 angeordnete, bzw. hängende Vorrichtung auf dem Sägeblatt 18 festgeklemmt. Gleichzeitig wird der hydraulische Zylinder 22 der Egalisiereinrichtung 2 ebenfalls mit Druck beaufschlagt. Die Egalisiereinrichtung 2 egalisiert den sich in ihrem Arbeitsbereich befindlichen Sägezahn 19. Unmittelbar darauf führt die Staucheinrichtung 1 die Stauchung eines anderen, sich in ihrem Arbeitsbereich befindlichen Sägezahns 19 durch, indem die Stauchwelle 9 über den Kolben 14 in eine begrenzte Drehbewegung gebracht wird und die Zahnbrust 21 staucht. Anschliessend löst der Klemmzylinder 7 die Klemmung des Sägeblattes 18. Der erste Arbeitsprozess ist beendet.

Die Vorrichtung wird nun von Hand an den Griffen 5 und 41 in Pfeilrichtung X gezogen, bis die Stauchwelle 9 der Staucheinrichtung 1 beim nächsten Sägezahn 19 einrastet. Durch Drücken des Schalters 30 wird der nächste Arbeitsprozess in Gang gesetzt.

Nach wenigen derartigen Arbeitszyklen hat der im ersten Zyklus von der Staucheinrichtung 1 gestauchte Sägezahn 19 die Egalisiereinrichtung 2 erreicht und wird egalisiert. Es liegt infolgedessen nach jedem weiteren Zyklus ein weiterer fertig gestauchter und egalisierter Zahn 19 vor.

Bearbeitet man ein Endlos-Sägeblatt, so kommt man am Schluss der Bearbeitung wieder in den Bereich der bereits zu Beginn gestauchten und egalisierten Sägezähne. Ist der letzte unbearbeitet gebliebene Zahn gestaucht worden, so müssen dieser und die weiteren, zwischen der Staucheinrichtung 1 und der Egalisiereinrichtung 2 liegenden Sägezähne 19 noch egalisiert werden. Dazu muss die Vorrichtung 37 teilweise über die bereits fertig bearbeiteten Sägezähne 19 geführt werden. Damit die letzteren nicht nochmals gestaucht werden, kann die Zuleitung zum Zylinder 11 der Staucheinrichtung unterbrochen werden. Die Vorrichtung 37 führt dann nur noch den Klemm- und den Egalisiervorgang durch. Nach dem Egalisieren der letzten Zähne ist die Bearbeitung abgeschlossen.

Wenn die Vorrichtung 37 gewichtsausgleichend am Bügel 4 aufgehängt ist, lässt sie sich bei Gebrauch leicht auf das Sägeblatt 18 absenken und bei Nichtgebrauch aus dem Bereich der Aufnahmevorrichtung 35 für das Sägeblatt 18 entfernen. Dies ist insbesondere wichtig, wenn die Aufnahmevorrichtung 35 einer Schleif- oder Schärfvorrichtung vorangestellt ist. Durch die gewichtsausgleichende Aufhängung kann die Vorrichtung leicht über das Sägeblatt 18 geführt werden, nachdem jeweils ein Zähnepaar bearbeitet ist.

Nach Bearbeitung einer gewissen Anzahl Zähne 19 muss dann das Sägeblatt 18 gegenüber der Vorrichtung 37 verschoben werden. Dies kann von Hand oder durch die Schärfmaschine 36 geschehen, falls diese gleichzeitig in Betrieb ist.

Selbstverständlich kann die Vorrichtung auch pneumatisch oder elektrisch betrieben werden, wenn entsprechende Vorkehrungen getroffen werden.

**Patentansprüche**

1. Vorrichtung (37) für das Stauchen der Zähne (19) eines Sägeblattes (18), welche von Hand auf das unabhängig von ihr gelagerte Sägeblatt (18) aufgesetzt werden kann und welche aus einer druckmittelbetriebenen Stauchvorrichtung (1) mit einem im Winkel zum Rücken eines Sägezahnes einstellbaren Amboss (10) und einer Stauchwelle (9) und einer Klemmvorrichtung (7) besteht, dadurch gekennzeichnet, dass die Vorrichtung eine Grundplatte (3) aufweist, an der in Richtung des Sägeblattes hinter der Stauchvorrichtung (1) und der Klemmvorrichtung (7) eine im Abstand verstellbare Egalisiervorrichtung (2) angeordnet ist, dass die Stauchvorrichtung (1) zur Winkelverstellung mit einem Apparatekörper (31) verbunden ist, der an der Grundplatte (3) schwenkbar gelagert ist, dass auf dem Apparatekörper (31) eine Einstellehre (29) aufsteckbar ist, nach deren Massgabe der Apparatekörper (31) über eine Stellschraube (39) verstellbar ist, und dass auch die Klemmvorrichtung (7) und die Egalisiervorrichtung (2) druckmittelbetätigt sind.

2. Vorrichtung nach Anspruch 1, dadurch gekennzeichnet, dass die Vorrichtung (37) über einer Sägeblattaufnahmevorrichtung (35) aufgehängt ist.

3. Vorrichtung nach einem der vorangehenden Ansprüche, dadurch gekennzeichnet, dass die Staucheinrichtung (1) eine auswechselbare Stauchwelle (9) und einen auswechselbaren Amboss (10) aufweist, wobei die Stauchwelle (9) durch einen hydraulischen oder pneumatischen Zylinder (11), einen Kolben (14) und eine Schubstange (15) zum Stauchen eines Sägezahnes (19) in eine begrenzte Drehbewegung bringbar und über eine Verstellschraube (16) oder eine Stellschraube (33) der Betrag der Stauchwellendrehung einstellbar ist.

4. Vorrichtung nach Anspruch 3, dadurch gekennzeichnet, dass die Stellschraube (33) zur Einstellung der Dicke der Stauchbraue verwendbar ist.

5. Vorrichtung nach Anspruch 1, dadurch gekennzeichnet, dass die Egalisiervorrichtung (2) einen hydraulischen oder pneumatischen Zylinder (22) mit einem Egalisierkolben (23) aufweist, wobei der Zylinder (22) und der Kolben (23) einen beweglichen Egalisierzylinder (24) in Richtung eines ortsfesten Egalisierzylinders (25) drücken, so dass der zwischen den beiden Zylindern (24, 25) liegende Sägezahn (19) egalisiert wird.

6. Vorrichtung nach den Ansprüchen 1 oder 5, dadurch gekennzeichnet, dass ein Verstellrad (26) zur Höhenverstellung der Egalisiereinrichtung (2) gegenüber dem Sägeblatt (18) vorgesehen ist, wodurch die Zahndicke an der Schneide einstellbar ist.

7. Vorrichtung nach Anspruch 1, gekennzeichnet, durch einen Schalter (30), durch den einer Prozesssteuerung ein Impuls zur Durchführung eines hydraulischen oder pneumatischen Arbeitsganges gebbar ist, bei welchem erstens der Klemmzylinder (7) unter Druck gesetzt wird, zweitens der Zylinder (22) der Egalisiereinrichtung (2) beaufschlagt wird und drittens mit Zeitverzögerung der Zylinder (11) der Staucheinrichtung (1) Druck erhält.

**Claims**

1. Fixture (37) for swaging the teeth (19) of a saw blade (18) which can be placed manually upon the independently mounted saw blade (18), and which consists of a pressure-medium actuated swaging device (1) having an anvil (10) which can be angularly adjusted to the back of a saw tooth, a swaging shaft (9) and a clamping device (7), characterised by the fact that the fixture has a base plate (3) upon which is disposed an equalizing device (2) with adjustment in the saw blade direction after the swaging device (1) and clamping device (7), such that the swaging device (1) is combined for angular adjustment with a body (31) pivotally mounted to the base plate (3), the possibility existing for a setting gauge (29) to be placed on to the body (31), this body (31) being adjustable according to the scale on the setting gauge (29), via a setting screw (39); the clamping device (7) and equalizing device (2) also being pressure-medium actuated.

2. Fixture according to claim 1, characterised by the fact that the fixture (37) is suspended via a saw blade holding device (35).

3. Fixture according to one of the foregoing claims, characterised by the fact that the swaging fixture (1) possesses an interchangeable swaging shaft (9) and an interchangeable anvil (10), the swaging shaft (9) being capable of having a limited rotary movement imparted to it via an hydraulic or pneumatic cylinder (11), a piston (14) and a push rod (15) for the purpose of swaging a saw tooth (19), the amount of the swaging shaft rotation being adjustable via an adjusting screw (16) or setting screw (33).

4. Fixture according to claim 3, characterised by the fact that the setting screw (33) is used for adjusting the thickness of the swaging brow.

5. Fixture according to claim 1, characterised by the fact that the equalizing device (2) possesses an hydraulic or pneumatic cylinder (22) with an equalizing piston (23), the cylinder (22) and the piston (23) pushing a movable equalizing cylinder (24) in the direction of a fixed equalizing cylinder (25), in such a way that the saw tooth (19) which is situated between the two cylinders (24, 25) is equalized.

6. Fixture according to claims 1 or 5, characterised by the fact that a setting wheel (26) is provided for adjusting the height of the equalizing device (2) in relation to the saw blade (18), the tooth thickness being set at the cutting edge.

7. Fixture according to claim 1, characterised by a switch (30) which is capable of providing a pulse by means of which a process control system performs an hydraulic or pneumatic work sequence in which firstly clamping cylinder (7) is pressurised, secondly the cylinder (22) of the equalizing device (2) has pressure applied, and thirdly, with a time delay, the cylinder (11) of the swaging device is placed under pressure.

## Revendications

1. Dispositif (37) pour le refoulement des dents (19) d'une lame de scie (18), pouvant être placé manuellement sur la lame de scie (18) posée indépendamment de lui, et se composant d'un dispositif de refoulement (1) actionné par un fluide sous pression avec une enclume (10) réglable à un angle voulu par rapport au dos d'une dent de scie et d'un arbre de refoulement (9) et d'un dispositif de serrage (7), caractérisé par le fait que le dispositif présente une plaque de base (3), sur laquelle un dispositif d'égalisation (2) réglable en distance est placé en direction de la lame de scie derrière le dispositif de refoulement (1) et le dispositif de serrage (7), que le dispositif de refoulement (1) est relié pour le réglage de l'angle avec un corps d'appareil (31), qui peut pivoter sur la plaque de base (3), qu'une jauge de réglage (29) peut être fixée au corps d'appareil (31), et permet selon son réglage de déplacer le corps d'appareil (31) au moyen d'une vis de réglage (39), et que le dispositif de serrage (7) et le dispositif d'égalisation (2) sont actionnés par un fluide sous pression.

2. Dispositif selon la demande 1, caractérisé par le fait que le dispositif (37) est suspendu au-dessus d'un support de la lame de scie (35).

3. Dispositif selon l'une des demandes précédentes, caractérisé par le fait que le dispositif de refoulement (1) présente un arbre de refoulement interchangeable (9) et une enclume interchangeable (10), l'arbre de refoulement (1) pouvant être amené à un mouvement limité de rotation par un vérin hydraulique ou pneumatique (11), un piston (14), et une bielle (15) pour refouler une dent de scie, et l'amplitude de la rotation de l'arbre de refoulement pouvant être réglée par une vis de réglage (16) ou une vis d'arrêt (33).

4. Dispositif selon la demande 3, caractérisée par le fait que la vis d'arrêt (33) est utilisable pour le réglage de l'épaisseur de la voie.

5. Dispositif selon la demande 1, caractérisé par le fait que le dispositif d'égalisation (2) possède un vérin hydraulique ou pneumatique (22) et d'un piston d'égalisation (23), le vérin (22) et le piston (23) pressant un vérin d'égalisation mobile (24) en direction d'un vérin d'égalisation stationnaire (25), de telle sorte que la dent de scie (19) se trouvant entre les deux vérins (24, 25) soit égalisée.

6. Dispositif selon les demandes 1 ou 5, caractérisé par le fait qu'une molette de réglage (26) est prévue pour le réglage en hauteur du dispositif d'égalisation (2) par rapport à la lame de scie (18), permettant le réglage de l'épaisseur de la lame sur le tranchant.

7. Dispositif selon la demande 1, caractérisé par un interrupteur (30), donnant une impulsion à une commande de processus pour l'exécution d'un cycle de travail hydraulique ou pneumatique, dans lequel premièrement le vérin de serrage (7) est mis sous pression, deuxièmement le vérin (22) du dispositif d'égalisation (2) est alimenté, et troisièmement le vérin (11) du dispositif de refoulement (1) reçoit la pression après une temporisation.

# FIG. 1

8

E  K  S

6

4

39

40

7

4

3  2

18

A

41

1  34  31  29

19

35

30

5

X

0 070 250

FIG. 2

0 070 250

FIG. 3

Fig. 4

Fig. 5